# EUROPEAN PATENT SPECIFICATION

(11) **EP 3 617 103 B1**
(45) Date of publication and mention of the grant of the patent: **05.05.2021**
(21) Application number: 19183398.7
(22) Date of filing: 28.06.2019
(51) Int. Cl.: B65G 21/20, B65G 39/18

(54) **GUIDING DEVICE FOR BULK GOODS CONVEYORS**
FÜHRUNGSVORRICHTUNG FÜR SCHÜTTGUTFÖRDERER
DISPOSITIF DE GUIDAGE POUR TRANSPORTEURS DE MARCHANDISES EN VRAC

(30) Priority: 28.08.2018 IT 201800008205
(43) Date of publication of application: 04.03.2020
(73) Proprietor: Movex S.p.A., 24060 Castelli Calepio (BG) (IT)
(72) Inventor: MARSETTI, Sergio, 6900 PARADISO (CH); MARSETTI, Matteo, 24060 TELGATE (BG) (IT)
(74) Representative: Ottazzo, Marco Francesco Agostino

(56) References cited:
- EP-A1- 3 070 032
- EP-A2- 0 787 666
- EP-A2- 1 905 708
- WO-A2-02/36462
- DE-U1-202012 003 039
- US-A- 5 957 261
- US-A1- 2002 017 067

## Description

The present invention generally relates to bulk goods conveyors and, more specifically, to a guiding device for a bulk goods conveyor.

It is known that a bulk goods conveyor defines a movement plane for general goods to be transported. Such a conveyor is generally a closed ring or endless ring one and possibly comprises, for example, a belt, a plurality of interconnected rollers, or a chain with articulated links.

In bulk goods conveyors, the use is also known of guiding devices that provide containment and/or conveyance of the goods being transported. The guiding devices define respective sliding surfaces which are substantially orthogonal to the plane wherein the conveyor moves, said sliding surfaces developing along the desired direction of movement of the goods being transported. The guiding devices develop along a direction which is either a straight line, an open broken line, or a curve, depending on the actual needs.

In particular, a practice is known of using lateral guiding devices, or side boards, and central guiding devices, or partition guides. Usually lateral guides or sideboards feature one sliding surface, whereas central or partition guides have two sliding surfaces, opposite and substantially parallel to each other. Central guides are positioned, for example, at the forks of the conveyor, i.e. wherever a stream of objects is to be split into two separate streams.

The sliding surfaces of lateral and central guides are typically implemented by a plurality of rolling bodies mounted idle on axles that are parallel to each other. The rolling bodies comprise, for example, cylindrical rollers, spheres, or rotated ellipsoids. The use of lateral and/or central guides with sliding surfaces defined by idle rolling bodies reduces friction phenomena and makes it possible a more regular forward movement of the stream of goods, while limiting the so-called "bridging" risks.

Examples of lateral guides with sliding rollers are described in documents EP-A-0787666, EP-A-0894745, and EP-A-0931737. Examples of central guides with sliding rollers arranged at two opposite sides are described in documents EP-A-1340698 and EP-A-1905708. Conversely, document US-A-5957261 discloses a special configuration of a shock-absorbing roller that can be used in a guiding device for bulk goods conveyor.

Documents EP-A-1340698 and EP-A-1723057 respectively disclose guiding devices wherein each guiding device includes a support shell. The support shell is provided with housings suitable for receiving roller-holder racks. Such support shell is also provided with coupling means for securing the guiding device to the conveyor frame. The document EP-A-1905708 discloses a guiding device according to the preamble of claim 1.

The guiding devices provided with rolling bodies are in any case formed of a high number of component parts separate from each other. In addition to the support shell and to the roller-holder racks, these guiding devices also include a plurality of rolling bodies, aligned along various axes parallel to each other, a further plurality of pins, wherein each pin makes-up the axis of rotation of a predefined number of such rolling bodies, as well as a plurality of spacing elements which are usually interposed between any two adjacent rolling bodies, driven into rotation about one and the same pin, and/or between any rolling body mounted on a given pin and one of the roller-holder racks.

Such high number of component parts entails a need for performing numerous machining processes to obtain all component parts necessary for the operation of the guiding device. Such high number of component parts also makes the operations necessary for assembling the guiding device difficult to perform.

An object of the present invention is thus to provide a guiding device for a bulk goods conveyor that is capable of solving the above-mentioned drawbacks of the known prior art in an extremely simple, cost-effective, and particularly functional manner.

In details, an object of the present invention is to provide a guiding device for a bulk goods conveyor that includes a lower number of functional component parts as compared to similar guiding devices according to the known prior art.

Another object of the present invention is to provide a guiding device for a bulk goods conveyor that makes it simpler to manufacture and assemble a guiding device itself as compared to similar guiding devices according to the known prior art.

These objects according to the present invention are achieved by implementing a guiding device for a bulk goods conveyor as set forth in claim 1.

Further features of the invention are highlighted in the dependent claims, which are an integral part of the present disclosure.

The features and advantages of a guiding device for a bulk goods conveyor according to the present invention will be more apparent from the following explanatory, non-limiting description, which makes reference to the attached schematic drawings, wherein:
figure 1 is an exploded perspective view of a first embodiment of the guiding device according to the present invention;
figure 2 is a front view of the guiding device of figure 1, shown in an assembled configuration;
figure 3 is a cross sectional view of the guiding device of figure 1 along the line III-III of figure 2;
figure 4 is an exploded perspective view of a second embodiment of a guiding device;
figure 5 is a front view of the guiding device of figure 4, shown in an assembled configuration;
figure 6 is a cross sectional view of the guiding device of figure 4 along the line VI-VI in figure 5;
figure 7 is a front view of a variant of the guiding device of figure 4, shown in an assembled configuration;
figure 8 is an exploded perspective view of a third embodiment of a guiding device;
figure 9 is a front view of the guiding device of figure 8, shown in an assembled configuration;
figure 10 is a cross sectional view of the guiding device of figure 8, along the line X-X of figure 9;
figure 11 is an exploded perspective view of a fourth embodiment of a guiding device;
figure 12 is a front view of the guiding device of figure 11, shown in an assembled configuration; and
figure 13 is a cross sectional view of the guiding device of figure 11 along the line XIII-XIII of figure 12.

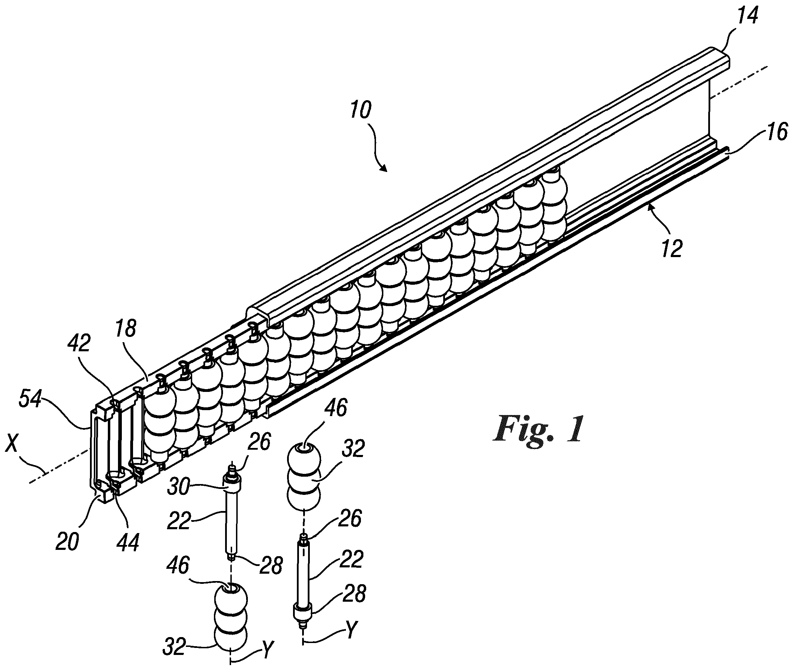

A preferred embodiment of the guiding device for a bulk goods conveyor according to the present invention is illustrated with specific reference to figures 1 to 3. The guiding device is identified as a whole by the reference numeral 10.

The guiding device 10 is of a type comprising a support structure 12 which develops along a predefined axis X, typically parallel to the axis of development and movement of the conveyor which the guiding device 10 can be coupled with. The axis of development X of the support structure 12 is either a straight line, an open broken line, or a curve, depending on the shape of the conveyor which the guiding device 10 can be coupled with. The support structure 12 is preferably formed of an aluminum profile having a substantially constant cross section, irrespective of its shape and longitudinal development.

The support structure 12 comprises at least one first channel 14 and at least one second channel 16 substantially opposite to each other, spaced away from each other and oriented along their respective axes substantially parallel to the axis of development X of the support structure 12 itself. The first channel 14 and the second channel 16 of the support structure 12 are consequently substantially equidistant.

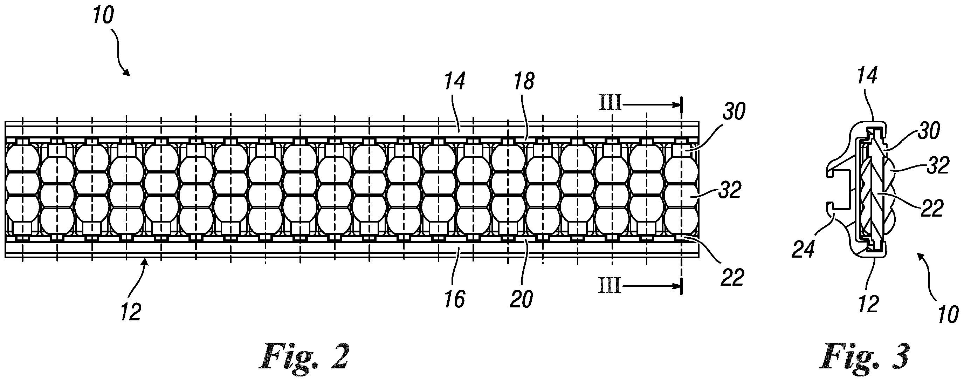

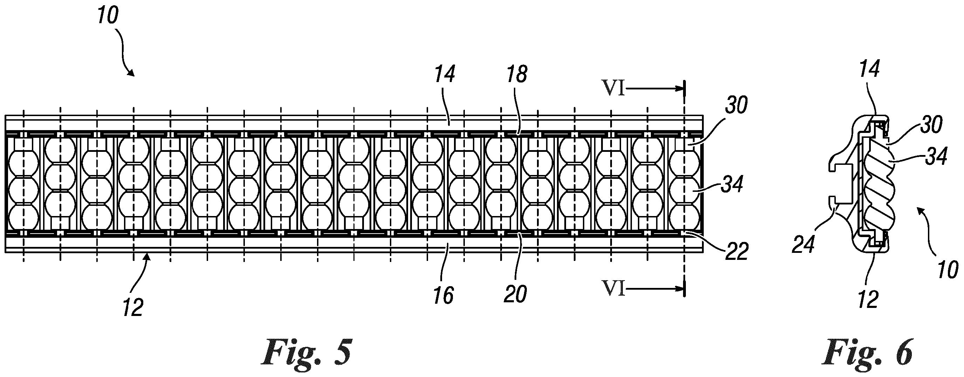

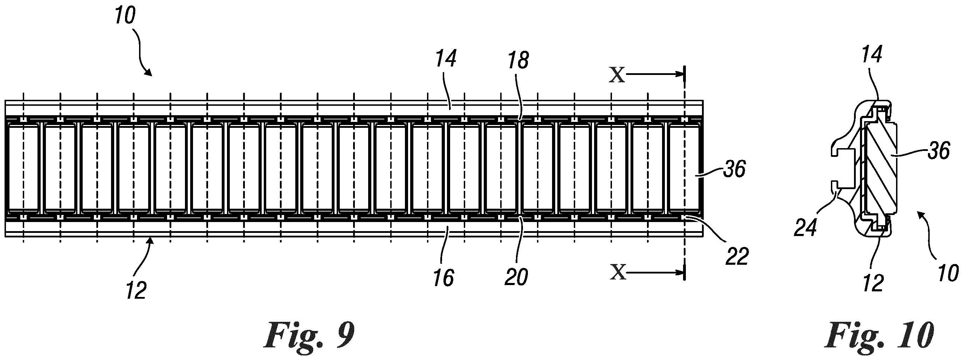

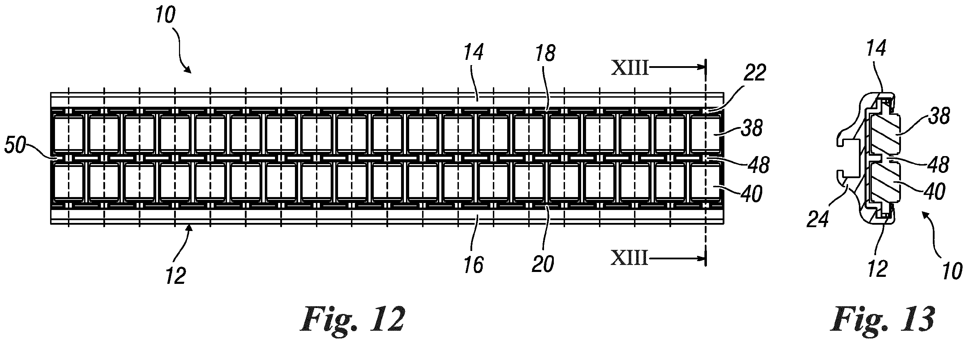

The support structure 12 also includes coupling means 24 for coupling with a fixed structure of the conveyor. The coupling means 24 are preferably obtained on a surface of the support structure 12 that is opposite to the surface whereon the first channel 14 and the second channel 16 are obtained. As shown in the cross-sectional views of the support structure 12 (figures 3, 6, 10, and 13), the coupling means 24 might comprise a third channel designed to be connected to a corresponding fixed structure of the conveyor via a sliding coupling.

The guiding device 10 also comprises at least one first positioning element 18, slidably inserted into the first channel 14 of the support structure 12, and at least one second positioning element 20, slidably inserted into the second channel 16 of said support structure 12. In an assembled configuration of the guiding device 10, the first positioning element 18 and the second positioning element 20 are consequently also substantially opposite to each other, spaced away from each other, and oriented along their respective axes substantially parallel to the axis of development X of the support structure 12. The first positioning element 18 and the second positioning element 20 are preferably made from a polymeric material. Even more preferably, the first positioning element 18 and the second positioning element 20 are made from a polyoxymethylene (POM)-based acetal resin. As is known, acetal resins are very rigid plastic materials that feature good mechanical strengths, hardness, and dimensional stability characteristics, thanks to the fact that they absorb little humidity. Therefore, acetal resins are particularly suitable for manufacturing precision mechanical parts.

A plurality of pins 22 are rotatably interposed between the first positioning element 18 and the second positioning element 20. Each pin 22 supports one or several rolling bodies 30, 32, 34, 36, 38, 40 designed to define, as a whole, a sliding surface for the goods being transported on the conveyor which the guiding device 10 is coupled with. Conveniently at least one of the rolling bodies 30, 34, 36, 38, 40 is supported by a respective pin 22 integrally formed with such pin 22, so as to reduce the number of functional component parts of the guiding device 10 as compared to similar guiding devices according to the known prior art.

As with the first positioning element 18 and the second positioning element 20, the pins 22 and their respective rolling bodies 30, 32, 34, 36, 38, 40 are also preferably made from a polymeric material. Even more preferably, the pins 22 and their respective rolling bodies 30, 32, 34, 36, 38, 40 are made from the same polyoxymethylene (POM)-based acetal resin that the first positioning element 18 and the second positioning element 20 are made from.

According to the embodiments of the guiding device 10 illustrated in the figures, the pins 22 are oriented along their respective axes Y parallel to each other and substantially perpendicular to the axis of development X of the support structure 12. Therefore, the rotation of the pins 22 and their respective rolling bodies 30, 32, 34, 36, 38, 40 with respect to these axes Y helps in conveying the goods placed on the conveyor, when in contact with such rolling bodies 30, 32, 34, 36, 38, 40, in the direction of movement of such conveyor.

Each pin 22 is provided with a first end portion 26 and a second end portion 28 opposite to each other, designed for being snap-fitted within corresponding seats 42, 44 obtained on the first positioning element 18 and on the second positioning element 20 respectively. The pins 22 being snap-mounted on their respective position elements 18 and 20 helps in simplifying the manufacturing steps of the guiding device 10.

Still with the purpose of reducing the number of the functional component parts of the guiding device 10, as well as of simplifying the manufacturing steps, the first positioning element 18 and the second positioning element 20 can be reciprocally joined by way of at least one connecting surface 54 integrally formed with such first positioning element 18 and with such second positioning element 20. In other words, the first positioning element 18, the second positioning element 20, and their respective connecting surface 54, being preferably made from one polymeric material, can be easily manufactured in one molding step.

The connecting surface 54 is obviously configured in such a way as not to interfere with the rotation of the pins 22 and of the rolling bodies 30, 32, 34, 36, 38, 40. The connecting surface 54 can thus be implemented in the form of a plurality of small bridges substantially oriented according to the axes Y of the pins 22 and interposed between the seats 42, 44 for snap-mounting such pins 22. Alternatively, the connecting surface 54 can be implemented in the form of a continuous wall, interposed between the support structure 12 and the pins 22 along with their respective rolling bodies 30, 32, 34, 36, 38, 40.

According to a preferred embodiment of the guiding device 10, illustrated in figures 1 to 3, each pin 22 is integrally formed with a rolling body 30 comprised of at least one spacing element having a substantially cylindrical shape, located at one of the two end portions 26 or 28 of such pin 22. Then at least one further roll-shaped rolling body 32, designed to rotate around the axis Y of such pin 22, is fitted onto the remaining part of the surface of the pin 22.

The rolling body 32 can be implemented in the form of two or several spheres joined to each other, each having a diameter greater than the diameter of the spacing element 30 and provided with a through hole 46 within which a respective pin 22 is introduced. The spacing element 30 is consequently interposed between the rolling body 32 and either end portion 26 or 28 of the pin 22 in an assembled configuration of the guiding device 10.

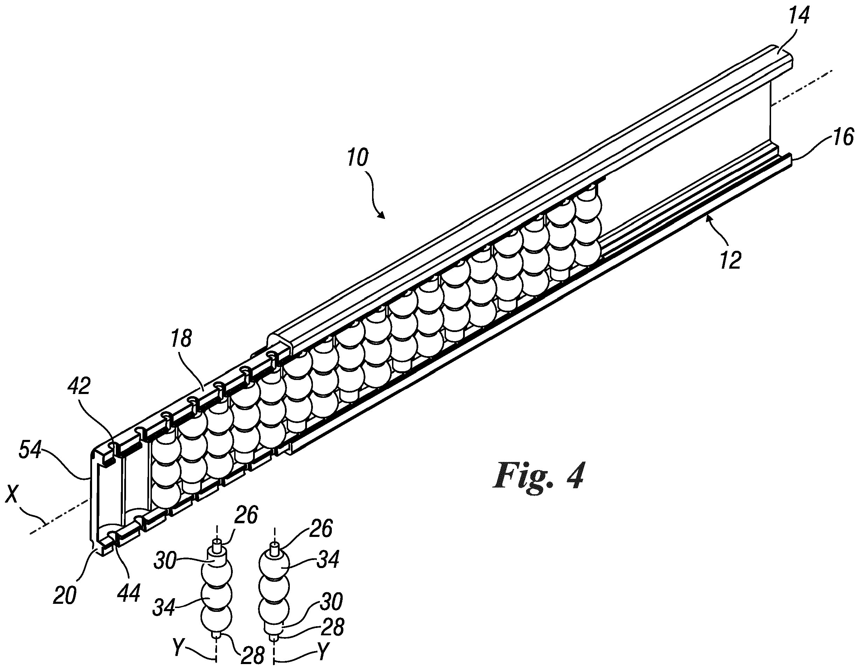

According to a second embodiment of the guiding device 10, which is illustrated in figures 4 to 6 and is not part of the present invention, each pin 22 is integrally formed both with a first rolling body 30, comprised of at least one substantially cylindrically shaped spacing element at either end portion 26 or 28 of such pin 22, and with a second rolling body 34, implemented in the form of two or several spheres joined to each other, having a diameter greater than the diameter of the spacing element 30 and placed side by side with such spacing element 30 along the axis Y of its respective pin 22. In other words, according to the second embodiment of the guiding device 10, each pin 22 is comprised of a one-piece element which also includes its respective rolling bodies 30 and 34.

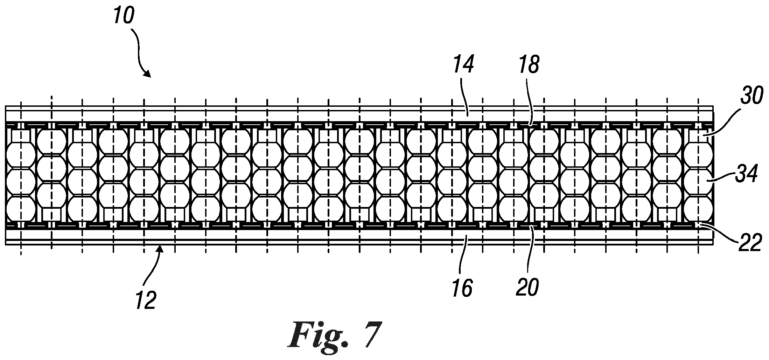

Figure 7 shows a variant of the second embodiment of the guiding device 10. In this variant, the pins 22 and their respective rolling bodies 30 and 34, integrally formed with such pins 22, are substantially equal to those of the second embodiment of the guiding device 10 as described above. However, the distance between the axes Y of pairs of contiguous pins 22, as measured along the axis of development X of the support structure 12, is shorter in this variant. In other words, the pins 22 are particularly close to each other in this variant, so that the surfaces of the rolling bodies 34 of pins 22 contiguous to each other can partially compenetrate.

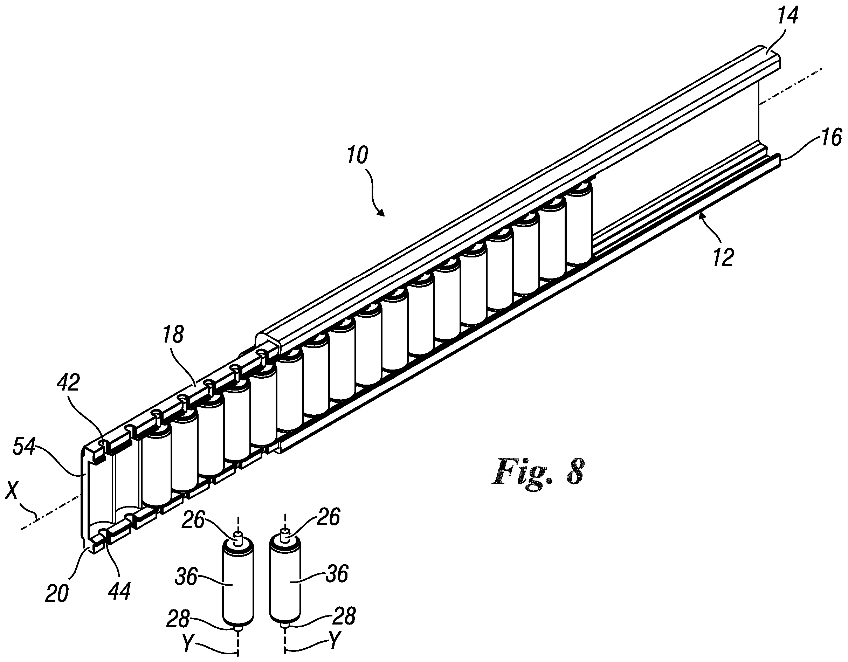

According to a third embodiment of the guiding device 10, which is illustrated in figures 8 to 10 and is not part of the present invention, each pin 22 is integrally formed with one rolling body 36 which consists of a straight circular cylinder, which axially extends between the two end portions 26 and 28 of its respective pin 22. In other words, the cylindrical rolling body 36 extends almost along the axial length of its respective pin 22, but at the two end portions 26 and 28.

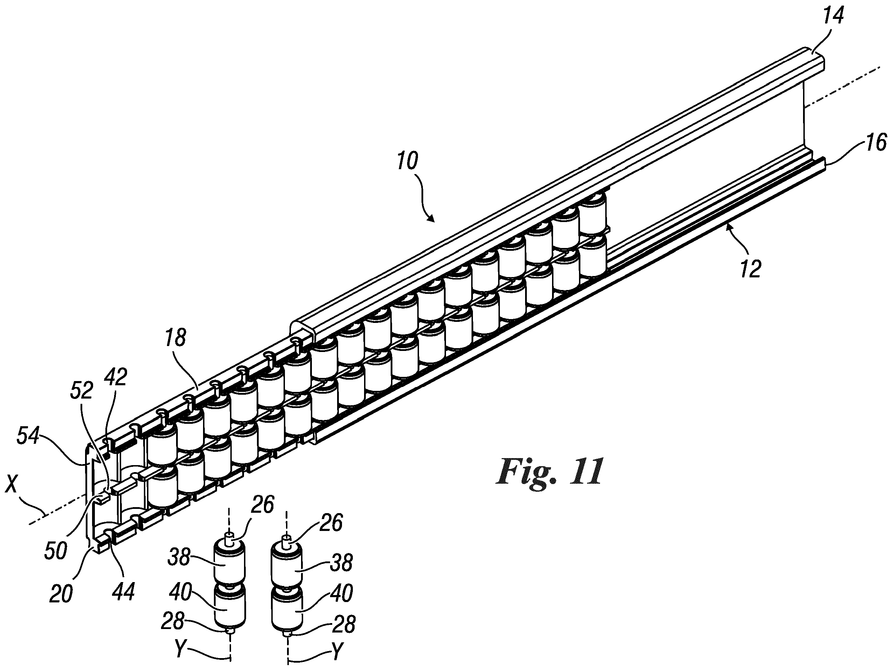

Finally, according to a fourth embodiment of the guiding device 10, which is illustrated in figures 11 to 13 and is not part of the present invention, each pin 22 is integrally formed with at least two rolling bodies 38 and 40 formed of respective straight circular cylinders. An intermediate section of its respective pin 22 is interposed between the two rolling bodies 38 and 40 and is designed for being snap-fitted within a corresponding seat 52 obtained on a third positioning element 50 of the support structure 12, interposed between the first positioning element 18 and the second positioning element 20 and substantially parallel to such first positioning element 18 and second positioning element 20.

It has been thus proved that the guiding device for a bulk goods conveyor according to the present invention achieves the previously identified objects.

In practice, the materials used, as well as shapes and dimensions, can be whatsoever depending on the technical requirements.

The scope of protection of the invention is defined by the attached claims.

## Claims

1. A guiding device (10) for a conveyor, the guiding device (10) comprising:
- a support structure (12) extending along a predefined axis (X), said support structure (12) comprising at least one first channel (14) and at least one second channel (16) substantially opposite each other, spaced apart from each other and oriented along respective axes which are substantially parallel to said predefined axis (X), said support structure (12) also comprising coupling means (24) for coupling with a fixed structure of the conveyor;
- at least one first positioning element (18), slidably inserted into said first channel (14);
- at least one second positioning element (20), slidably inserted into said second channel (16); and
- a plurality of pins (22), rotatably interposed between said first positioning element (18) and said second positioning element (20), wherein each pin (22) supports one or more rolling bodies (30; 32; 34; 36; 38; 40) arranged to form a sliding surface for goods being transported by the conveyor, wherein each pin (22) is provided with a first end portion (26) and with a second end portion (28), opposite each other,
the guiding device (10) being **characterized in that** at least one of the rolling bodies (30; 34; 36; 38; 40) supported by a respective pin (22) is integrally formed with said pin (22), and wherein each pin (22) is integrally formed with a rolling body (30) consisting of at least one spacing element having a substantially cylindrical shape, placed at one of the two end portions (26, 28) of said pin (22), whereas at least one further roll-shaped rolling body (32), designed to rotate around the axis (Y) of said pin (22), is fitted onto the remaining part of the surface of said pin (22).

2. The guiding device (10) according to claim 1, **characterized in that** said pins (22) are oriented along respective axes (Y) parallel to one another and substantially perpendicular to said predefined axis (X).

3. The guiding device (10) according to claim 1 or 2, **characterized in that** said first end portion (26) and said second end portion (28), opposite each other, are designed for being snap-fitted into corresponding seats (42, 44) obtained on said first positioning element (18) and on said second positioning element (20), respectively.

4. The guiding device (10) according to any claims 1 to 3, **characterized in that** said rolling body (32) is made in the form of two or more spheres joined to one another, having a diameter which is greater than the diameter of said spacing element (30) and being provided with a through hole (46) within which a respective pin is introduced (22), so that said spacing element (30) is interposed between said rolling body (32) and one of the two end portions (26, 28) of said pin (22) in the assembled configuration of the guiding device (10).

5. The guiding device (10) according to any claims 1 to 4, **characterized in that** said first positioning element (18) and said second positioning element (20) are mutually joined through at least one connecting surface (54) integrally formed with said first positioning element (18) and with said second positioning element (20), said connecting surface (54) being preferably made in the form of a plurality of small bridges or in the form of a continuous wall.

## Patentansprüche

1. Führungsvorrichtung (10) für einen Förderer, wobei die Führungsvorrichtung (10) Folgendes umfasst:
- eine Tragkonstruktion (12), die sich entlang einer vordefinierten Achse (X) erstreckt, wobei die Tragkonstruktion (12) mindestens einen ersten Kanal (14) und mindestens einen zweiten Kanal (16) aufweist, die im Wesentlichen einander gegenüberliegen, Abstand voneinander haben und entlang jeweiliger Achsen ausgerichtet sind, die sich im Wesentlichen parallel zu der vordefinierten Achse (X) befinden, wobei die Tragkonstruktion (12) auch eine Kopplungseinrichtung (24) zum Koppeln mit einer festen Konstruktion des Förderers umfasst;
- mindestens ein erstes Positionierelement (18), das gleitend in den ersten Kanal (14) eingesetzt ist;
- mindestens ein zweites Positionierelement (20), das gleitend in den zweiten Kanal (16) eingesetzt ist; und
- eine Vielzahl von Stiften (22), die drehbar zwischen dem ersten Positionierelement (18) und dem zweiten Positionierelement (20) angeordnet sind, wobei jeder Stift (22) einen oder mehrere Rollkörper (30; 32; 34; 36; 38; 40) stützt, die so angeordnet sind, dass sie eine Gleitfläche für Güter bilden, die durch den Förderer transportiert werden, wobei jeder Stift (22) mit einem ersten Endteil (26) und mit einem zweiten Endteil (28) versehen ist, die einander gegenüberliegen,
wobei die Führungsvorrichtung (10) **dadurch gekennzeichnet ist, dass** mindestens einer der von einem jeweiligen Stift (22) gestützten Rollkörper (30; 34; 36; 38; 40) zusammen mit dem Stift (22) ausgebildet ist, und wobei jeder Stift (22) zusammen mit einem Rollkörper 30) ausgebildet ist, der aus mindestens einem Abstandselement mit einer im Wesentlichen zylindrischen Form besteht, das an einem der beiden Endteilen (26, 28) des Stifts (22) angeordnet ist, wobei mindestens ein weiterer rollenförmiger Rollkörper (32), der dazu bestimmt ist, sich um die Achse (Y) des Stifts (22) zu drehen, auf dem verbleibenden Teil der Oberfläche des Stiftes (22) angebracht ist.

2. Führungsvorrichtung (10) gemäß Anspruch 1, **dadurch gekennzeichnet, dass** die Stifte (22) entlang jeweiliger Achsen (Y) parallel zueinander und im Wesentlichen senkrecht zu der vordefinierten Achse (X) ausgerichtet sind.

3. Führungsvorrichtung (10) gemäß Anspruch 1 oder 2, **dadurch gekennzeichnet, dass** das erste Endteil (26) und das zweite Endteil (28), die einander gegenüberliegen, zum Einschnappen in entsprechende Sitze (42, 44) ausgebildet sind, die sich am ersten Positionierelement (18) bzw. am zweiten Positionierelement (20) befinden.

4. Führungsvorrichtung (10) gemäß einem der Ansprüche 1 bis 3, **dadurch gekennzeichnet, dass** der Rollkörper (32) in Form von zwei oder mehr miteinander verbundenen Kugeln hergestellt wird, die einen Durchmesser aufweisen, der größer ist als der Durchmesser des Abstandselements (30), und mit einem Durchgangsloch (46) versehen sind, in das ein entsprechender Stift (22) eingeführt wird, so dass das Abstandselement (30) in der zusammengebauten Konfiguration der Führungsvorrichtung (10) zwischen dem Rollkörper (32) und einem der beiden Endteilen (26, 28) des Stifts (22) angeordnet ist.

5. Führungsvorrichtung (10) gemäß einem der Ansprüche 1 bis 4, **dadurch gekennzeichnet, dass** das erste Positionierelement (18) und das zweite Positionierelement (20) durch mindestens eine zusammen mit dem ersten Positionierelement (18) und mit dem zweiten Positionierelement (20) ausgebildete Verbindungsfläche (54) miteinander verbunden sind, wobei die Verbindungsfläche (54) vorzugsweise in Form mehrerer kleiner Stege oder in Form einer durchgehenden Wand ausgebildet ist.

## Revendications

1. Dispositif de guidage (10) d'un convoyeur, le dispositif de guidage (10) comprenant :
- une structure de soutien (12) s'étendant le long d'un axe prédéfini (X), ladite structure de soutien (12) comprenant au moins un premier canal (14) et au moins un deuxième canal (16) sensiblement opposés l'un à l'autre, espacés l'un de l'autre et orientés le long d'axes respectifs qui sont sensiblement parallèles audit axe prédéfini (X), ladite structure de soutien (12) comprenant également des moyens de couplage (24) aux fins de couplage avec une structure fixe du convoyeur ;
- au moins un premier élément de positionnement (18), inséré par coulissement dans ledit premier canal (14) ;
- au moins un deuxième élément de positionnement (20), inséré par coulissement dans ledit deuxième canal (16) ; et
- une pluralité de broches (22), interposées de manière rotative entre ledit premier élément de positionnement (18) et ledit deuxième élément de positionnement (20), dans lequel chaque broche (22) prend en charge un ou plusieurs corps roulants (30 ; 32 ; 34 ; 36 ; 38 ; 40) agencés pour former une surface de glissement pour les marchandises transportées par le convoyeur, dans lequel chaque broche (22) est pourvue d'une première partie d'extrémité (26) et d'une deuxième partie d'extrémité (28), opposées l'une à l'autre, le dispositif de guidage (10) étant **caractérisé en ce que** au moins un des corps roulants (30 ; 34 ; 36 ; 38 ; 40) supportés par une broche respective (22) est formé intégralement avec ladite broche (22), et dans lequel chaque broche (22) est formée intégralement avec un corps roulant (30) constitué d'au moins une entretoise ayant une forme sensiblement cylindrique, placé à l'une des deux parties d'extrémité (26, 28) de ladite broche (22), tandis qu'au moins un autre corps roulant en forme de rouleau (32), conçu pour tourner autour de l'axe (Y) de ladite broche (22), est monté sur la partie restante de la surface de ladite broche (22).

2. Dispositif de guidage (10) selon la revendication 1, **caractérisé en ce que** lesdites broches (22) sont orientées le long d'axes respectifs (Y) parallèles entre eux et sensiblement perpendiculaires audit axe prédéfini (X).

3. Dispositif de guidage (10) selon la revendication 1 ou 2, **caractérisé en ce que** la première partie d'extrémité (26) et ladite deuxième partie d'extrémité (28), opposées l'une à l'autre, sont conçues pour être fixées par encliquetage dans les sièges correspondants (42, 44) obtenus sur le premier élément de positionnement (18) et sur le deuxième élément de positionnement (20), respectivement.

4. Dispositif de guidage (10) selon les revendications 1 à 3, **caractérisé en ce que** ledit corps roulant (32) est réalisé sous la forme de deux ou plusieurs sphères reliées l'une à l'autre, ayant un diamètre qui est supérieur au diamètre de ladite entretoise (30) et étant muni d'un trou de passage (46) dans lequel une broche respective est introduite (22), de sorte que ladite entretoise (30) est interposée entre ledit corps roulant (32) et l'une des deux parties d'extrémité (26, 28) de ladite broche (22) dans la configuration assemblée du dispositif de guidage (10).

5. Dispositif de guidage (10) selon les revendications 1 à 4, **caractérisé en ce que** ledit premier élément de positionnement (18) et ledit deuxième élément de positionnement (20) sont reliés mutuellement par au moins une surface de jonction (54) formée intégralement avec ledit premier élément de positionnement (18) et avec ledit deuxième élément de positionnement (20), ladite surface de jonction (54) étant de préférence réalisée sous la forme d'une pluralité de petits ponts ou sous la forme d'une paroi continue.
